# EUROPEAN PATENT APPLICATION

(11) **EP 4 556 380 A1**
(43) Date of publication of application: **21.05.2025**
(21) Application number: 23461681.1
(22) Date of filing: 17.11.2023
(51) Int. Cl.: B64U 50/39, H01M 50/264, B64U 10/14

(54) **A FRAME FOR UNMANNED AERIAL VEHICLE AND A METHOD OF REPLACING BATTERY**

(71) Applicant: "Rogoz" Spolka z Ograniczona Odpowiedzialnoscia- A-Spolka Komandytowo-Akcyjna, 20-135 Lublin (PL)
(72) Inventor: Gramala, Pawel, 41-814 Zabrze (PL); Szczepanik, Piotr, 20-722 Lublin (PL); Krafczyk, Damian, 44-100 Gliwice (PL); Kulpinski, Dominik, 31-636 Krakow (PL)
(74) Representative: Bury & Bury

(57) **Abstract**

A frame **(100)** for unmanned aerial vehicle, according to the invention comprises a battery compartment **(110)** with an opening at a first side adapted to receive a battery and a latch **(130)** suitable for locking the battery in an inserted position in the battery compartment **(110).** The frame has an electrical connector **(112)** attached to a wall of the battery compartment, at a second side opposite to the first side. The wall of the battery compartment **(110)** has a pusher opening **(111)** in a proximity of the electrical connector **(112).** The frame **(100)** is provided with a pusher **(120)** protruding through the pusher opening **(111)** provided with resilient means **(124)** pushing battery out of the battery compartment **(110).** The pusher **(120)** has an activation end located outside the battery compartment **(110),** the resilient means **(124)** are configured to apply a force pushing the battery outwards, having a value within a range from 2 N to 6 N when battery is in fully inserted position. The latch **(130)** is configured to release the battery when the battery exerts a force within a range from 4 N to 27 N against the latch. The invention concerns also a method of replacing battery in an unmanned aerial vehicle having a frame **(100)** according to the invention.

## Description

### Field of the invention

The invention concerns a frame for unmanned aerial vehicle and a method of replacing battery. The invention concerns in particular a frame for drone used a as an element of the swarm.

### State of the art

CN212230484 discloses battery fixing mechanism for an unmanned aerial vehicle, which comprises a vehicle body and a battery bin arranged on one side of the vehicle body. According to the utility model, the circuit connecting plate and the push-out spring are sequentially arranged on the inner wall of the right side of the battery compartment from top to bottom. When the battery compartment is used, after the silica gel cover plate is opened, the storage battery is pushed into the battery compartment from left to right, and when the storage battery is in contact with the clamping plate, the guide surface arranged at the bottom of the clamping plate pushes up the pressing column under the action.

CN109103374 discloses a battery for an unmanned aerial vehicle (UAV). The battery is matched with a battery compartment of the UAV. The battery comprises a battery main body, a case arranged outside the battery main body and a plurality of transmission parts arranged at one end of the battery main body. The transmission parts are matched with conductive blocks in the battery compartment of the UAV. The battery compartment of the unmanned aerial vehicle comprises a frame, an elastic assembly arranged on an inner side end of the frame, guide members arranged on opposite sides of the frame, and at least one locking assembly arranged at an outlet of the frame.

CN107112464 discloses a battery fixing mechanism, UAV frame and battery management device. The battery fixing mechanism comprises a locking device for fixing the battery, wherein the locking device comprises an unlocking button, and a drive mechanism for locking the battery in the battery lock. The drive mechanism comprises a lever, one end of the lever can be connected with the unlocking button, and the other end can be connected with the unlocking button. When unlocking the locking device, the unlocking button is operated, and the battery lock is driven out of the battery through the driving mechanism.

### Problem to be solved

It is generally acknowledged that battery fixing mechanisms are important for convenience of a use of a drone or generally unmanned aerial vehicle (UAV) and design thereof is surprisingly non-trivial task. This task is even more challenging when a frame of UAV for drone swarm needs to be designed. Drone swarm requires very fast, and substantially simultaneous installation or replacement of batteries in swarm elements. The task of replacing battery should be maximally consistent in the same process parameters every time for each drone, which is important for automated replacement within a swarm or efficient replacement by human operators. Simultaneously, the battery needs to be securely connected so that it is not detached during the flight. On the other hand, sudden impact caused by collision should, if possible, release the battery to minimize damages for a drone and other swarm elements.

These conditions are difficult to be met as typically the battery is at least partly held by electrical connector thereof. A holding force of electrical connector is changing substantially during its life cycle. At first it is quite strong, but it is reduced with each connection/disconnection action. Therefore, depending on the age of the connector the battery is held with different force and battery replacement action is not that consistent.

It is an object of the invention to provide solution to this problem and adequate frame of drone with battery compartment.

### Summary of the invention

The invention concerns a frame for unmanned aerial vehicle. The frame according to the invention comprises a battery compartment with a cavity open at a first side adapted to receive a battery. The compartment has a latch suitable for locking the battery in an inserted position in the battery compartment. The frame further has an electrical connector attached to a wall of the battery compartment, at a second side opposite to the first side. According to the invention the wall of the battery compartment has a pusher opening in a proximity of the electrical connector. The frame is provided with a pusher protruding through the pusher opening provided with resilient means. the pusher further has an actuation end located outside the battery compartment and adapted to receive external force, and operating head located at the opposite end of the pusher. The operating head is adapted to apply a force to the battery. The actuation end is adapted to be pressed with external force. The resilient means are configured to apply a force pushing the battery outwards, having a value within a range from 2 N to 6 N when the battery is in fully inserted position. The latch is configured to release the battery when the battery exerts against the latch a force within a range from 4 N to 27 N. It has been tested that configuration according to the invention speeds up the process of replacing battery, while it prevents accidental battery unlocking and results in attenuation of the vibrations and mitigates their negative impact on the electrical connector. Moreover, even when electrical connector is worn off the combination of the latch and the resilient means keeps parameters of the process required to replace battery substantially similar. That makes it easier to automate and to repeat manually when the frame according to the invention is used with a swarm of drones. Additionally, it appeared that position of pusher of a drone is easily visible from the outside and allows operators to immediately learn if the battery is installed within said drone.

Advantageously, the latch comprises a bar and a protuberance for holding the battery. Such configuration makes it easy to obtain required value of releasing force.

The pusher advantageously comprises a cylinder protruding through the pusher opening having a dummy plug at an actuation end outside the compartment and an operating head at an opposite end inside the battery compartment. Such configuration is easy to manufacture and fail proof.

Operating head advantageously has a shape of a truncated cone or pyramid. That kind of shape allows positioning the pusher opening closer to the electrical connector.

The resilient means of the pusher advantageously comprise a spring coiled round the cylinder disposed between the operating head and the wall of the frame. Spring coiled around the pusher and compressed by the battery acts directly in desired direction and is secured from falling of.

A method of replacing a depleted battery in an unmanned aerial vehicle, according to the invention is applicable for the unmanned aerial vehicle having a frame that has a battery compartment, a latch and a pusher, according to the invention. The method comprises a step of actuating the pusher by pressing it to eject the depleted battery from the battery compartment, a step of removing the depleted battery, a step of inserting a charged battery and a step of fixing the battery by pressing it against the pusher until the latch is locked on an edge of the charged battery.

### Description of drawings

The invention has been described below in detail, with reference to the following figures.
Fig. 1 shows another side view of the frame according to said embodiment of the invention illustrating cavity for receiving a battery in the battery compartment.
Fig. 2 shows a side view of a frame according to an embodiment of the invention.
Fig. 3 shows a top view of the frame according to said embodiment of the invention.
Fig. 4 shows the frame according to said embodiment of the invention, in perspective.
Fig. 5 shows a horizontal cross-section through a battery compartment of the frame according to said embodiment of the invention, taken along A-A axis shown in Fig. 2.
Fig. 6 shows a vertical cross-section through a battery compartment of the frame according to said embodiment of the invention, taken along C-C axis shown in Fig. 3.
Fig. 7 shows detail "B" denoted in Fig. 5 illustrating the pusher in said embodiment of the invention in horizontal cross-section.
Fig. 8 shows magnified view of section of battery compartment next to the pusher of in said embodiment of the invention.
Fig. 9 shows detail "D" denoted in Fig. 6.
Fig. 10 shows a side view of the pusher of said embodiment of the invention.
Fig. 11 and 12 show perspective view of said pusher.

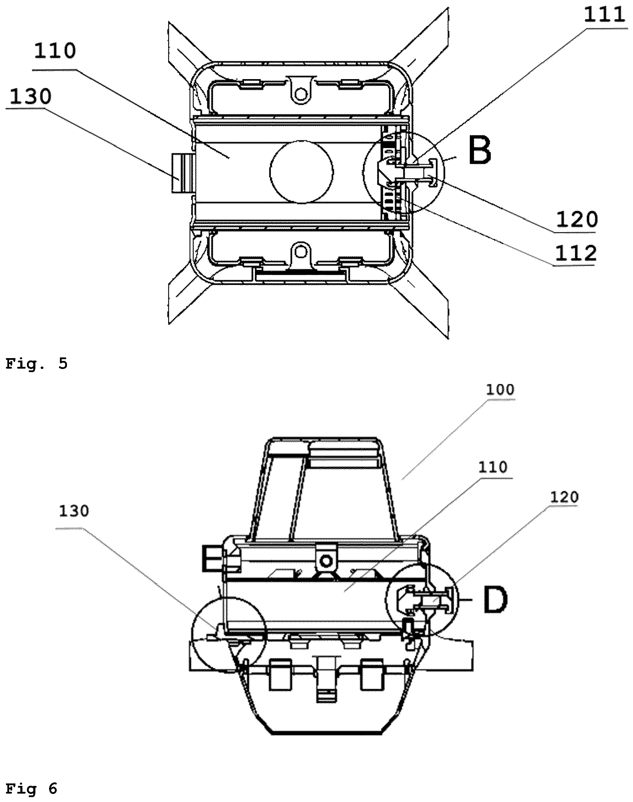

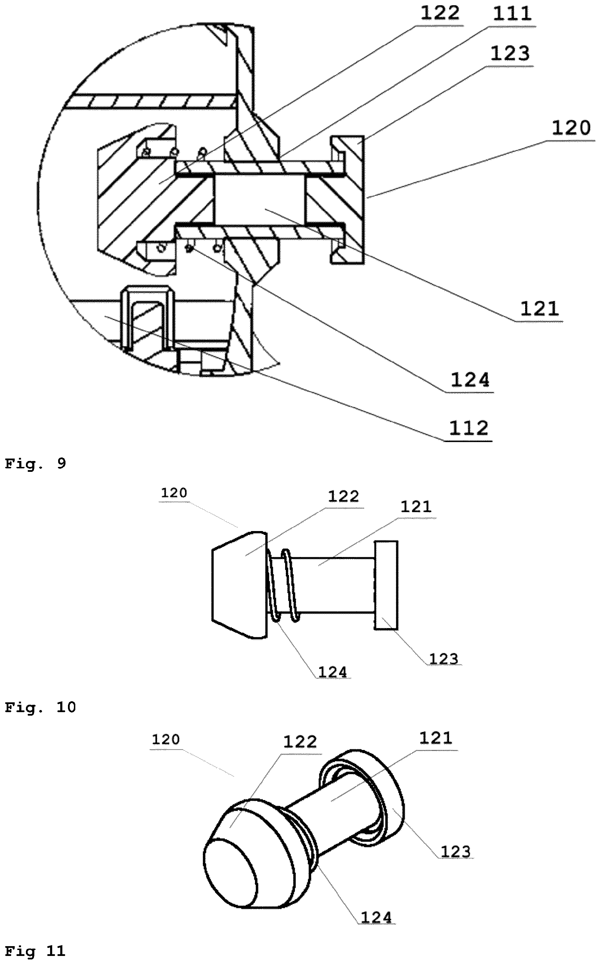

Fig. 10 shows detail "E" denoted in Fig. 6 illustrating the latch of said embodiment of the invention in vertical cross-section.
Fig. 11 shows in perspective area of the frame in a proximity of the opening adapted to receive the battery, also showing the latch of said embodiment of the invention.

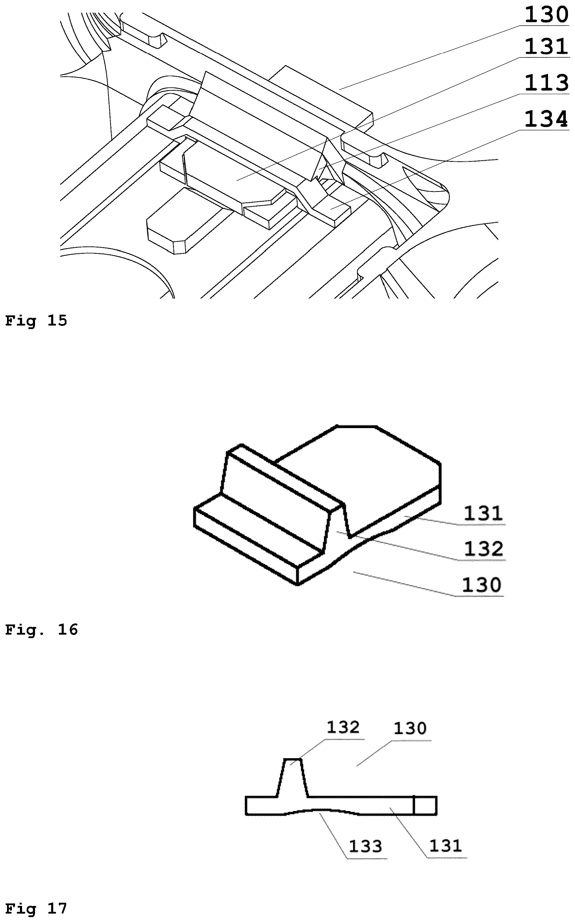

Fig. 15 shows perspective view from the inside of the battery chamber of said embodiment of the invention, illustrating the latch.
Fig. 16 shows perspective view of the latch alone.
Fig. 17 shows side view of the latch alone.

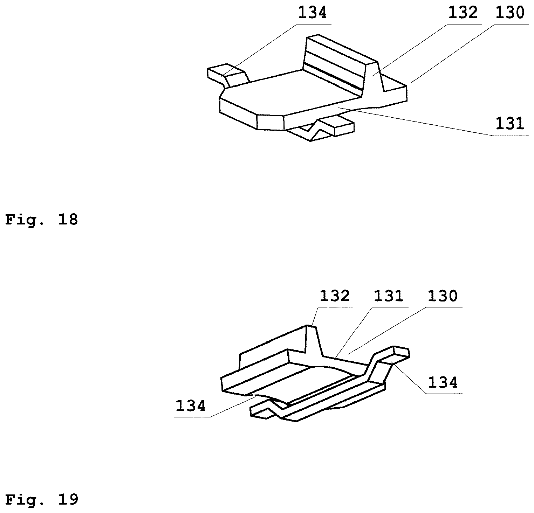

Fig. 18 and 19 show perspective view of said latch with additional support member.

### Embodiments of the invention

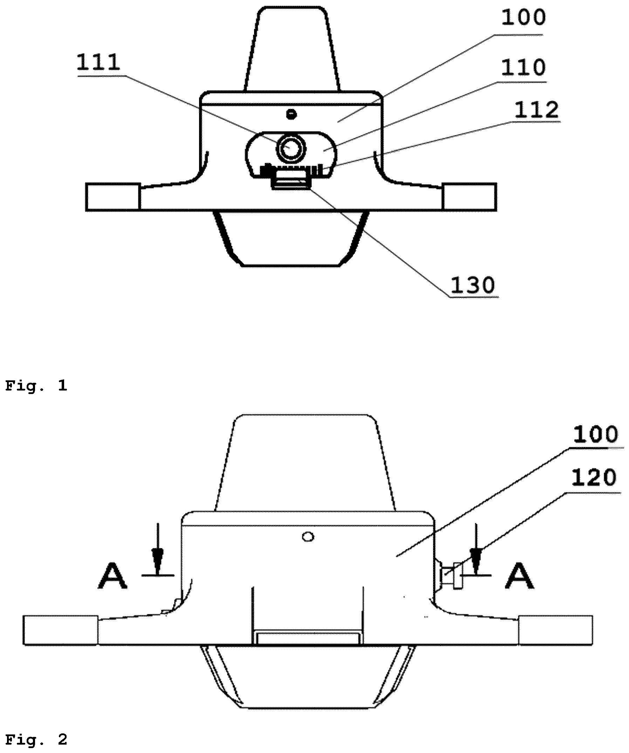

Fig. 1 and Fig. 2 show a side view of a frame **100** of unmanned aerial vehicle e.g., a drone, according to an embodiment of the invention. Fig. 1 shows open cavity of the battery compartment **110** protected with the latch **130.** This cavity is adapted to receive the battery. Fig. 2 is orthogonal to Fig. 1 and shows the pusher **120** used to eject the battery from the battery compartment **110.** The pusher **120** protrudes through the pusher opening **111** in a wall of the battery compartment **110** opposite to the open end of the cavity adapted to receive the battery.

In a proximity of the pusher opening **111** on the same wall of the battery compartment **110** the electrical connector **112** is provided. The electrical connector **112** is attached to the wall of the battery compartment **110** at a second side opposite to the battery compartment **110** open cavity.

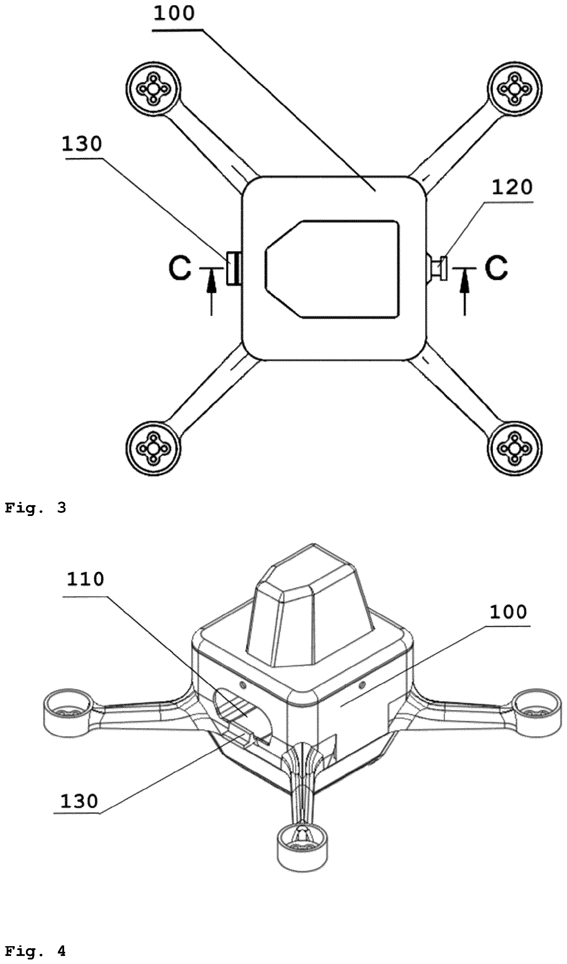

In the present embodiment the frame **100** is made of acrylonitrile styrene acrylate (ASA) material. The battery compartment **110** is provided with the latch **130** suitable for locking the battery in an inserted position in the battery compartment **110.** The pusher **120** is located on the opposite side of the battery compartment **110** cavity with respect to the latch **130** and is adapted to operate against the latch **130** by pushing the battery. This configuration is shown in Fig. 3 illustrating top view of the frame **100.** Perspective view shown in Fig. 4 shows the frame **100** and an open cavity of the battery compartment **110,** adapted to receive the battery (not shown).

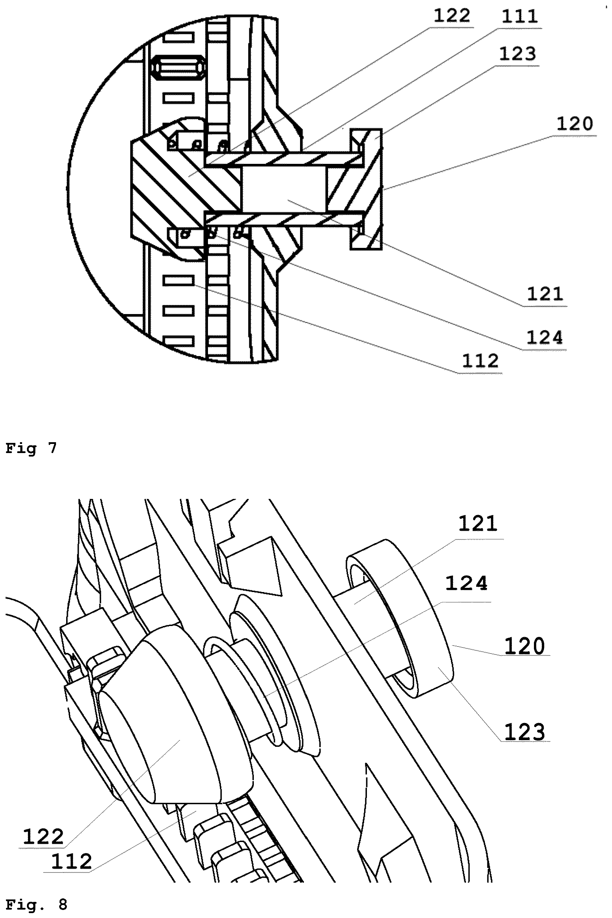

The electrical connector **112** (not visible in Fig. 3) is located on the same side of the battery compartment **110** as the pusher **120.** It is visible in Fig. 5 showing horizontal cross-section along axis A-A denoted in Fig. 2. Both the latch **130** and the electrical connector **112** hold the battery in place. The pusher **120** is adapted to exert force releasing the battery when external force is applied thereto. Fig. 5 denotes detail "B" which is shown in Fig. 7.

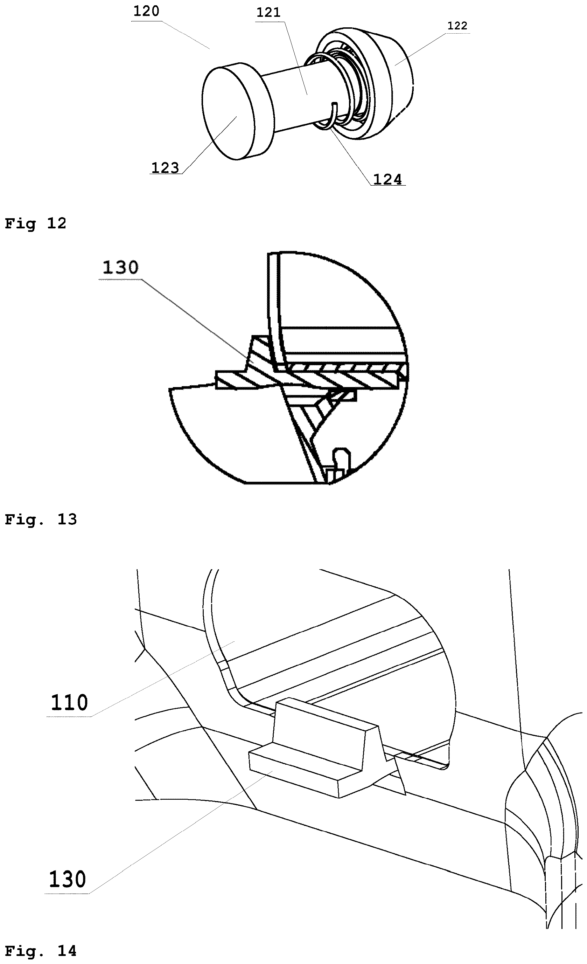

Fig. 6 shows a vertical cross-section through a battery compartment **110** of the frame **100** according to said embodiment of the invention, taken along C-C axis shown in Fig. 3. Fig. 6 denotes detail "D" showing the pusher **120** in vertical cross-section and detail "E" showing the latch **130** in vertical cross-section. Detail "D" is shown in Fig. 9 and detail "E" is shown in Fig. 13.

The wall of the battery compartment **110** has the pusher opening **111** in a proximity of the electrical connector **112.** The pusher **120** comprises the cylinder **121** made of a carbon fiber protruding through the pusher opening **111** in the wall of the battery compartment **110.** The pusher **120** has an activation end located outside the battery compartment **110** and provided with the dummy plug **123** having a diameter larger than a diameter of the pusher opening **111** in the wall of the battery compartment **110.** Thus, when operator applies inwards force to the pusher **120** it cannot fall into the battery compartment **110** cavity. At an opposite end of the cylinder **121,** inside the battery compartment **110** the pusher **120** is provided with the operating head **122.** Both dummy plug **123** and operating head **122** are made of elastic material e.g. polypropylene - PP. The operating head **122** can have various shapes. Arbitrary shapes may be obtained with 3D printing. A truncated pyramid or cone applied in the present embodiment has an advantage that it allows enough space for a battery connector to be connected to the electrical connector **112.** Locating the pusher **120** close to the electrical connector **112** reduces risk of rotating and clogging of the battery when ejected. Spatial position of the pusher **120** with respect to the electrical connector **112** is illustrated in Fig. 7, 8 and 9.

Details of the pusher **120** in this embodiment are shown in Fig. 10, 11 and 12. The pusher **120** is provided with resilient means **124** disposed between the operating head **122** and the wall of the battery compartment **110.** In the present embodiment the resilient means element is a spring **124** coiled around the cylinder **121.** Notably person skilled in the art is able to suggest many different resilient means to obtain substantially the same effect.

The latch **130** of the present embodiment is discussed below in reference to Fig. 13-19. The latch **130** comprises the bar **131** made of elastic material and provided with the protuberance **132** adapted to clamp the battery in place. The battery when fixed in the battery compartment **110** pushes the cylinder **121** of the pusher **120** outwards through the opening **111,** engages the electrical connector **112** and has an edge secured by the protuberance **132.**

The spring **124** of the pusher **120** are configured to apply a force pushing the battery outwards. Then the spring **124** is compressed, this force has a value of 4 N. Generally, springs having forces within a range from 2 N to 6 N when compressed are well applicable.

The bar **131** and the protuberance **132** of the latch **130** are configured to release when the battery exerts against the protuberance **132** a force of 10 N. Generally, forces within a range from 4 N to 27 N proved to be convenient for inserting or ejecting the battery by the operator and applicable for automation as well as are safe in flight as they do not cause undesirable battery release during flight. The force applied by the battery may be exerted when user applies external force to the dummy plug **123** provided at the activation end of the pusher **120.** The bar **131** and protuberance **132** are made of flexible PP material. For the prototyping purpose it is highly advisable if material is 3D printable.

The electrical connector **112** is a scissor connector adapter to endure currents up to 25 A. The connector needs also to be light - an example of such connector is TE Connectivity mouser 571-1-1473776-7. When a brand new electrical connector **112** holds the battery with a force of c.a. 8÷9 N. During use this force is likely to be reduced to 4 N.

The operator needs to apply to the pusher **120** a force of c.a. 14 N to release the battery when the scissor connector is brand new. When the scissor connector **112** is worn off this force drops to c.a. 10 N, which does not affect the convenience of replacement.

Unusual configuration in which the spring **124** works against strength of the latch **130** holds the battery in place and prevents vibration and sudden movements even during rapid maneuvers of the drone. This prevents a risk of loosening of the battery caused by vibrations and its accidental release due to inertia when the battery gains momentum. The embodiment of the invention is adapted to work with a battery having a mass of 95 g and a drone limited to 250 g. Operation of such drones in many countries do not require particular certification. An example of such battery is a package 2S1P, a series combination of cells P28A type 18650 by Molicel. Each cell has maximal voltage of 4.2 V and capacity of 2800 mAh. Total voltage of package is 8.4 V. Packet is protected with a sleeve and has a connector soldered at the edge.

As visible in Fig. 13 and 14 the battery (not shown) is held aligned with outer wall of the battery compartment **110** by the latch **130.** The battery does not require any modification to be compatible with the invention. For additional stability the battery compartment **110** may be provided with rails for holding the battery in place in direction perpendicular to direction of inserting.

The bar **131** is supported with a rigid support **134** made of rigid material e.g., acrylonitrile styrene acrylate (ASA), the same as the frame **100.** Other light rigid materials are also applicable, especially the ones that are 3D printable. ASA is optimal tradeoff between mass and weight. The rigid support **134** may be integrated with the frame **100** or attached with glue - e.g., a cyanoacrylate glue with an activator.

A method of replacing the battery in a unmanned aerial vehicle, according to an embodiment of the invention comprises a step of actuating the pusher **120** to eject depleted battery from the battery compartment **110,** step of removing the depleted battery, step of inserting charged battery and a step of fixing the battery by pressing it against the pusher **120** until latch **130** is locked on the edge of charged battery.

As shown in Fig. 17 protuberance **132** in this embodiment has substantially a trapezoidal cross-section. Angles of the trapezoidal cross-section are 78°. The shape is not exactly trapezoidal as one of its sides is curved - radius of curvature is 36 mm. It is the side interacting with the battery.

The bar **131** is provided with a recess **133** below the protuberance **132** located in the proximity of the protuberance **132** inside the battery compartment **110.** The recess **133** is tubular and its radius of curvature is 17 mm. The recess reduces the force required to release the latch **130.** This configuration makes it easy to adapt the value of the force required to release to desired level e.g. by cut and try.

The bar **131** is 13.6 mm wide, 21.4 mm long and 2 mm thick. The protuberance **132** starts 3.45 mm from the outer, free end of the bar **131.** The protuberance **132** is 4.2 mm heigh and in its highest point it is 2.72 mm wide.

Due to application of the rigid support **134,** holding force of the latch **130** is coarsely determined by the width of the bar **131,** height of the protuberance **132,** tilt of its side and length of the bar **131** measured as distance between the support **134** and the protuberance **132.** Fine tuning of the force depends on the curvature of the side of protuberance **132** and depth of the recess **133.**

It is important to emphasize that the frame **100,** as well as the latch **130** mechanism associated with the battery compartment **110,** can be constructed using a wide array of materials and in various shapes. The selection of materials and construction methods may vary to suit the specific requirements of the application, such as durability, weight, and cost-effectiveness within the scope of the attached claims.

The material of the frame **100** may include but is not limited to lightweight yet robust substances like aluminum, carbon fiber, or various composite materials. Furthermore, the latch **130** mechanism, designed to securely hold the battery compartment **110** in place, can be manufactured from different materials such as polymers, metals, or even specialized alloys, depending on factors like weight distribution and mechanical strength. It is advantageous to use 3D printable materials to obtain maximal conformity of prototypes made with 3D printing and final models.

Moreover, it is evident to those skilled in the art that there are numerous ways to achieve the requisite holding strength for the battery compartment **110** of the drone. Various latch designs, locking mechanisms, and materials can be employed to ensure the secure attachment of the battery to the frame **100.** The precise choice of materials, latch configuration, and attachment method may depend on the specific use case and environmental conditions in which the drone is intended to operate. Nevertheless, the configuration presented herein proved to be easy to manufacture and robust in the drones of up to 250 g.

Embodiments described above serve as illustrative examples, allowing understanding of the present invention which is not limited thereto but defined by the attached claims. The examples are not meant to be restrictive, but rather serve to provide valid disclosure for those skilled in the art. This patent thus embraces a spectrum of possible variations and innovations that fall within the scope of the attached claims, fostering ongoing advancements in drone design and technology.

## Claims

1. A frame (**100**) for unmanned aerial vehicle,
the frame (**100**) comprising
a battery compartment (**110**) with a cavity adapted to receive a battery, open at a first side, having a latch (**130**) suitable for locking the battery in an inserted position in the battery compartment (**110**) cavity,
an electrical connector (**112**) attached to a wall of the battery compartment (**110**), at a second side opposite to the first side,
**characterized in that**
the wall of the battery compartment (**110**) has a pusher opening (**111**) in a proximity of the electrical connector (**112**),
the frame (**100**) is provided with a pusher (**120**) protruding through the pusher opening (**111**), the pusher being provided with resilient means (**124**),
the pusher (**120**) further has
an actuation end located outside the battery compartment (**110**) and adapted to receive external force, and
operating head (**122**) located at the opposite end of the pusher (**120**), wherein the operating head (**122**) is adapted to apply a force to the battery,
the resilient means (**124**) are configured to apply via operating head (**122**) a force pushing the battery outwards from battery compartment (**110**), the force having a value within a range from 2 N to 6 N when the battery is in a fully inserted position, and the latch (**130**) is configured to release the battery when the battery exerts against the latch a force within a range from 4 N to 27 N.

2. Frame (**100**) according to claim 1, wherein the latch (**130**) comprises a bar (**131**) and a protuberance (**132**) for holding the battery.

3. Frame (**100**) according to claim 1 or 2, wherein the pusher (**120**) comprises a cylinder (**121**) protruding through the pusher opening (111) having a dummy plug (**123**) at an actuation end and an operating head (**122**) at an opposite end located inside the battery compartment (**110**).

4. Frame (**100**) according to claim 3, wherein the operating head (**122**) has a shape of a truncated cone or pyramid.

5. Frame (**100**) according to claim 3 or 4 wherein the resilient means (**124**) of the pusher (**120**) comprise a spring coiled round the cylinder (**121**) disposed between the operating head (**122**) and the wall of the frame (**100**).

6. A method of replacing a depleted battery in an unmanned aerial vehicle, **characterized in that** the unmanned aerial vehicle has a frame (**100**) as defined in any of the preceding claims, having a battery compartment (**110**), a latch (**130**) and a pusher (**120**), wherein the method comprises a step of actuating the pusher (**120**) by pressing it to eject the depleted battery from the battery compartment (**110**), a step of removing the depleted battery, a step of inserting a charged battery and a step of fixing the battery by pressing it against the pusher (**120**) until the latch (**130**) is locked on an edge of the charged battery.
